# DEMANDE DE BREVET EUROPEEN

(11) **EP 2 051 478 A1**
(43) Date de publication de la demande: **22.04.2009**
(21) Numéro de dépôt: 08166742.0
(22) Date de dépôt: 16.10.2008
(51) Int. Cl.: H04L 29/06

(54) **Procédé d'envoi d'un contenu**

(30) Priorité: 17.10.2007 FR 0758375
(71) Demandeur: FRANCE TELECOM, 75015 Paris (FR)
(72) Inventeur: Petion, Romaric, 22560, PLEUMEUR (FR); Neveux, Didier, 22140, CAVAN (FR)

(57) **Abrégé**

Une instruction d'envoi (M3) d'un contenu à un système destinataire est traitée par un pair d'un réseau de pair pour le compte d'un serveur d'application, ladite instruction spécifiant un ou plusieurs formats de codage, ledit procédé comprenant une étape de diffusion (45) à travers un réseau de pairs (7) d'un message d'interrogation (M4), en vue de rechercher au moins un pair apte à obtenir et transmettre ledit contenu; une étape de sélection (48) d'un pair parmi le ou les pairs ayant répondu positivement audit message d'interrogation (M4); une étape d'envoi (50) au pair sélectionné (7b) d'un message de commande (M6) pour commander l'obtention et l'envoi par le pair sélectionné au système destinataire dudit contenu codé selon un desdits formats.

## Description

La présente invention concerne la mise en oeuvre d'un service dans un réseau de télécommunication. Une application particulière de l'invention concerne la mise en oeuvre d'un service dans un réseau de télécommunication construit selon une architecture de type IMS.

L'architecture IMS (pour sous-système multimédia IP ou "Internet Protocol multimédia subsystem" en Anglais) est une architecture réseau introduite par le 3GPP (pour "3rd Generation Partnership Project"). Cette architecture permet la mise en oeuvre de services à destination d'un client.

Un exemple de service est un service météorologique pour l'accès à une prévision météorologique à partir d'un portail téléphonique.

L'accès à cette prévision implique l'envoi d'un ou plusieurs contenus à un système destinataire. Le système destinataire comprend notamment un équipement client.

Un contenu est, par exemple, une annonce vocale informant le client d'une action qu'il doit effectuer pour accéder à la prévision. Cette action est, par exemple, l'appui sur une touche déterminée de l'équipement client.

L'architecture IMS définit différents équipements intervenant dans l'envoi du contenu.

En particulier dans un système de communication basé sur l'architecture IMS, un serveur d'application est utilisé pour sélectionner le contenu qui doit être reçu par l'équipement client en fonction d'une action du client. Une fois la sélection du contenu effectuée, le serveur d'application envoie à un premier équipement réseau une instruction d'envoi du contenu. Ce premier équipement est appelé contrôleur de fonction ressource multimédia (Multimedia Resource Function Controller en Anglais). Le contrôleur de fonction ressource multimédia (dit contrôleur de fonction dans la suite de la description) commande un second équipement réseau pour la mise à disposition de ressources. Ce second équipement est appelé processeur de fonction ressource multimédia (Multimedia Resource Function Processor en Anglais). Le processeur de fonction ressource multimédia (dit processeur de fonction dans la suite de la description) met à disposition des ressources multimédia pour obtenir le contenu selon un format de codage et envoyer ce contenu sous forme d'un flux continu (streaming en Anglais) au système destinataire.

Le document WO 2007/062570 présente un contrôleur de fonction apte à commander un grand nombre de processeurs de fonction. Lorsque le contrôleur de fonction reçoit l'instruction d'envoi du contenu, il sélectionne un processeur de fonction parmi les processeurs de fonction qu'il peut commander. Pour effectuer cette sélection, le contrôleur de fonction doit préalablement acquérir et stocker des caractéristiques concernant les ressources multimédia disponibles dans les différents processeurs de fonction.

L'acquisition et le stockage de ces caractéristiques nécessitent des opérations de traitement au niveau du contrôleur de fonction.

Afin de toujours sélectionner le processeur de fonction le plus adapté à l'instruction d'envoi, le contrôleur de fonction doit mettre à jour régulièrement les caractéristiques stockées. Cette mise à jour implique des opérations de traitement supplémentaires au niveau du contrôleur de fonction.

L'ensemble de ces opérations de traitement peut perturber le fonctionnement du contrôleur de fonction et ponctuellement empêcher la mise en oeuvre du service.

La présente invention propose un procédé selon la revendication 1.

Dans un réseau de pairs, chaque pair a un nombre limité de connexions directes avec des pairs voisins. Chaque pair du réseau de pairs stocke et met à jour des caractéristiques concernant uniquement les pairs avec qui il est en connexion directe. L'organisation des connexions directes entre les pairs dans le réseau de pairs est telle que malgré le nombre limité de connexions directes que chaque pair possède, chaque pair peut communiquer avec n'importe quel pair du réseau de pairs.

Selon l'invention, le pair contrôleur, formant contrôleur de fonction, est membre du réseau de pairs et des pairs du réseau de pairs sont potentiellement aptes à être les processeurs de fonction. En mettant en oeuvre le procédé d'envoi selon l'invention, le pair contrôleur sélectionne et commande un pair, formant processeur de fonction, apte à obtenir et à envoyer le contenu, par exemple sous forme d'un flux continu, tout en limitant les opérations de stockage et de mises à jour dans le contrôleur de fonction. Ceci permet de limiter les perturbations dans le fonctionnement du contrôleur de fonction tout en sélectionnant le processeur de fonction adapté à l'instruction d'envoi.

L'invention est intégrable dans une architecture de type IMS. Dans ce cas, le réseau de pairs, comportant le pair contrôleur de fonction et le pair processeur de fonction tels que définis dans l'invention, est vu par les entités de l'architecture IMS (IP Multimedia Subsystem) comme un fournisseur de ressources média (MRF), sans qu'il soit nécessaire que celles-ci aient connaissance de l'organisation sous forme de réseau de pairs de ce fournisseur de ressources média (MRF). Les entités de l'architecture IMS dialoguent avec le serveur d'application dédié au service, ce serveur d'application commandant le pair contrôleur de fonction par envoi d'instructions appropriées. Seul le serveur d'application sait que son fournisseur de ressources média (MRF) est organisé en réseau de pairs. Il s'agit donc d'une organisation propre au serveur d'application et donc au fournisseur de service.

Selon un mode de réalisation, le système destinataire n'accède pas audit réseau de pairs, le pair contrôleur recevant du serveur d'application des paramètres de connexion au système destinataire pour l'établissement de ladite liaison.

Grâce à l'invention, un système destinataire n'accédant pas au réseau de pairs peut obtenir un contenu accessible à travers ce réseau de pairs. Le pair contrôleur joue le rôle d'intermédiaire entre le serveur d'application et le réseau de pairs et commande un des pairs du réseau de pairs pour effectuer, pour le compte du serveur d'application, l'envoi du contenu à un système destinataire tel que spécifié par le serveur d'application.

Par ce mécanisme, le réseau de pairs joue, pour le compte du serveur d'application, le rôle d'un serveur polyvalent cumulant les ressources des différents pairs connectés à ce réseau.

Selon un mode de réalisation particulier non limitatif, un procédé selon l'invention comporte une étape de sélection d'un format de codage, ladite étape de sélection étant mise en oeuvre préalablement à l'étape d'envoi dudit message de commande au pair sélectionné si le pair sélectionné est apte à obtenir ledit contenu codé selon différents formats de codage.

Il est ainsi possible de choisir un format de codage parmi les formats de codage supportés par le système destinataire.

L'invention concerne aussi un équipement réseau comportant des moyens pour la mise en oeuvre du procédé tel que décrit ci-dessus.

L'invention concerne également un procédé de mise à disposition de ressources selon la revendication 4.

L'invention concerne aussi un équipement réseau comportant des moyens pour la mise en oeuvre du procédé de mise à disposition de ressources selon l'invention.

L'invention concerne aussi un procédé selon la revendication 5 de mise en oeuvre d'un service impliquant l'envoi d'un ou plusieurs contenus à un système destinataire.

L'invention concerne également un système selon la revendication 8 pour la mise en oeuvre d'un service impliquant l'envoi d'un ou plusieurs contenus à un système destinataire..

L'invention concerne aussi un programme d'ordinateur comportant des instructions pour la mise en oeuvre d'un procédé d'envoi d'un contenu à un système destinataire lorsque ledit programme est exécuté par un processeur.

L'invention concerne également un programme d'ordinateur comportant des instructions pour la mise en oeuvre d'un procédé de mise à disposition de ressources lorsque ledit programme est exécuté par un processeur.

L'invention concerne aussi un procédé d'offre de téléchargement d'un programme selon l'invention..

L'invention concerne également un procédé d'attribution d'au moins un avantage à un utilisateur associé à un équipement utilisateur comportant une étape consistant à attribuer un avantage audit utilisateur lorsqu'un programme selon l'invention est exécuté par un processeur de l'équipement utilisateur.

L'invention sera mieux comprise et d'autres particularités et avantages apparaîtront à la lecture de la description, faite à titre d'exemple, cette description faisant référence aux dessins annexés :
- La Fig.1 illustre de façon schématique un exemple d'un système de communication selon l'invention;
- La Fig.2 illustre de façon schématique la structure d'un contrôleur de fonction selon l'invention;
- La Fig.3 illustre de façon schématique la structure d'un processeur de fonction selon l'invention;
- La Fig.4 décrit un mode de réalisation, selon l'invention, pour la mise en oeuvre d'un service impliquant l'envoi d'un ou plusieurs contenus à un système destinataire suite à une ou plusieurs actions d'un client.

L'invention est décrite ci-après dans une application particulière à l'accès à une prévision météorologique à partir d'un portail téléphonique. L'invention s'applique également à tout type de services impliquant l'envoi d'un ou plusieurs contenus, par exemple, un service d'accès à une messagerie vocale.

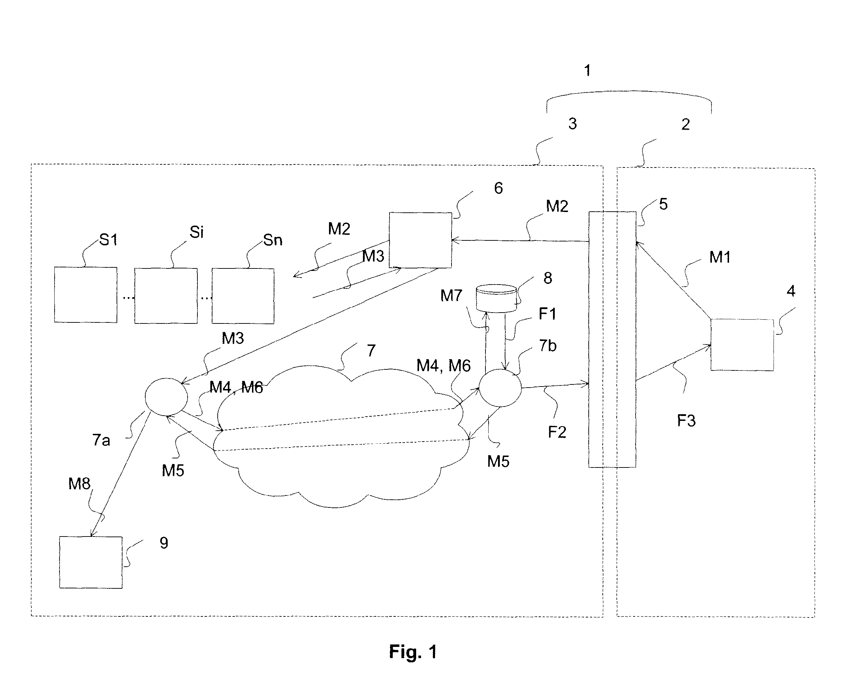

La Fig.1 illustre un système de communication 1 selon l'invention. Dans cet exemple, le système de communication 1 est constitué d'un premier réseau 2 et d'un deuxième réseau 3 interconnectés par une passerelle 5.

Le premier réseau 2 est un réseau téléphonique commuté. En variante, le premier réseau 2 est un réseau de téléphonie mobile, par exemple un réseau GSM.

Le deuxième réseau 3 est un réseau construit selon une architecture IMS utilisant le protocole de transport Internet.

Le système de communication 1 comprend un système destinataire constitué ici par un équipement client 4 et par la passerelle 5.

L'équipement client 4 est un équipement communiquant tel qu'un téléphone fixe. En variante, l'équipement client 4 est un téléphone mobile.

La mise en oeuvre du service météorologique implique la réception d'un ou plusieurs contenus par l'équipement client 4 suite à l'envoi d'un ou plusieurs messages de requête par l'équipement client 4.

Chaque contenu est un ensemble de données audio par exemple une annonce vocale, une vidéo ou un texte, par exemple un SMS (Short Message en Anglais).

L'équipement client 4 comprend des moyens pour envoyer un premier message de requête M1 en direction du deuxième réseau 3 suite à une action du client.

Le premier message de requête M1 contient un identifiant de l'action du client. L'identifiant de l'action du client est, par exemple, un numéro de téléphone associé au portail téléphonique.

Suite à la réception du premier message de requête M1, la passerelle 5 construit un second message de requête M2. Le second message de requête M2 est adapté à l'architecture IMS. Le second message de requête M2 contient également l'identifiant de l'action du client.

Dans une variante de réalisation, l'équipement client est un équipement de communication sur IP qui fait partie du second réseau 3. Dans cette configuration, le système de communication 1 selon l'invention ne comporte pas nécessairement le premier réseau 2 et la passerelle 5 assurant l'interconnexion vers le second réseau 3.

Dans le mode de réalisation décrit à la Fig.1, la passerelle 5 transmet le second message de requête M2 à un équipement de routage 6. L'équipement de routage 6 comprend des moyens pour router le second message de requête M2 vers un serveur d'application Si appartenant à un ensemble de n serveurs d'application avec 1 ≤ *i* ≤ *n* et n un entier quelconque.

Dans une variante de réalisation, la passerelle 5 connaît l'adresse IP du serveur d'application Si. Le second message de requête M2 est alors envoyé directement au serveur d'application Si sans passer par l'équipement de routage 6.

Le serveur d'application Si sélectionne le contenu en fonction de l'identifiant de l'action du client. Le serveur d'application Si envoie, ensuite, un message d'instruction d'envoi M3 du contenu à un contrôleur de fonction 7a. Le contrôleur de fonction 7a commande un processeur de fonction 7b. Le processeur de fonction 7b est chargé d'obtenir le contenu codé et d'envoyer à la passerelle 5 le contenu codé, de préférence sous forme d'un flux continu (streaming en Anglais).

Le contrôleur de fonction 7a et le processeur de fonction 7b sont, ici, des pairs d'un réseau de pairs 7 également appelé réseau pair-à-pair.

Le pair mettant en oeuvre le contrôleur de fonction 7a - dit pair contrôleur - est un pair appartenant à l'opérateur de service et sous maitrise de l'opérateur de service. Il s'agit d'un pair équipé de ressources matérielles et logicielles pour la mise en oeuvre des fonctionnalités d'un contrôleur de fonction adapté au service visé, en l'occurrence au service d'envoi de contenu. Préférentiellement, plusieurs pairs du réseau de pairs sont agencés pour être contrôleurs de fonction et pour assurer la charge et la permanence du service. Le choix du pair contrôleur parmi les pairs agencés pour être contrôleurs de fonction peut être réalisé de différentes manières. Il dépend par exemple de la politique du fournisseur de service. La méthode de choix peut être plus ou moins sophistiquée, allant d'un simple choix cyclique à un choix prenant en compte la charge des pairs contrôleurs.

Le pair mettant en oeuvre le processeur de fonction 7b - dit pair processeur - est un pair équipé de ressources matérielles et logicielles pour la mise en oeuvre des fonctionnalités d'un processeur de fonction adapté au service visé, en l'occurrence au service d'envoi de contenu. Tous les pairs du réseau de pairs ne disposent pas nécessairement de telles ressources. Il est possible notamment que certains pairs soient équipés de ressources matérielles et logicielles pour la mise en oeuvre des fonctionnalités d'un processeur de fonction adapté pour certains services seulement mais pas pour d'autres services. Le réseau de pairs forme, grâce aux différents pairs processeurs, un serveur polyvalent, intégrant un mécanisme de répartition de charge et de compétence fonctionnelle.

Dans le réseau de pairs, chaque pair peut échanger avec d'autres pairs des messages construits selon un protocole pair-à-pair, par exemple selon le protocole mis en oeuvre dans le réseau pair-à-pair appelé GNUTELLA. Chaque pair du réseau de pairs comprend alors la pile protocolaire associée au protocole pair-à-pair. Les messages échangés entre chaque pair sont appelés dans la suite de la description messages pair-à-pair.

Dans le réseau de pairs, chaque pair peut d'une part recevoir les messages pair-à-pair, traiter ces messages pair-à-pair et envoyer des réponses à ces messages pair-à-pair et d'autre part envoyer des messages pair-à-pair vers des pairs voisins connectés directement avec chaque pair afin d'obtenir les réponses à ces messages pair-à-pair. Ces pairs voisins peuvent également traiter les messages pair-à-pair. Ces pairs voisins peuvent également envoyer les messages pair-à-pair afin d'obtenir les réponses à ces messages pair-à-pair. Il est ainsi possible de diffuser les messages pair-à-pair à travers le réseau de pairs et d'obtenir plusieurs réponses à un même message pair-à-pair envoyé.

Le pair du réseau de pairs est, par exemple, un équipement communiquant mis à disposition dans le réseau de pairs 7 par un utilisateur. Ainsi, la maintenance de l'équipement communiquant est à la charge de l'utilisateur.

En variante, le pair du réseau de pairs est un équipement communiquant mis à disposition dans le réseau de pairs par un fournisseur de service.

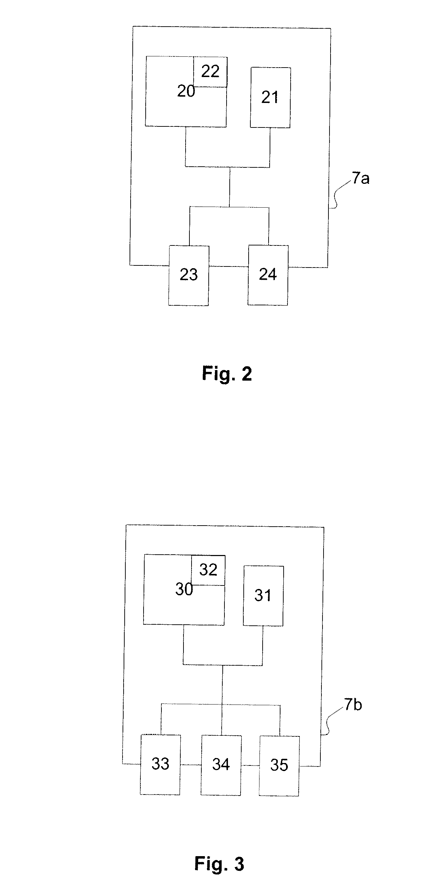

La structure du contrôleur de fonction 7a est illustrée schématiquement à la Fig.2. Le contrôleur de fonction 7a comprend notamment une mémoire 20 et un microprocesseur 21. Le microprocesseur 21 est piloté par un programme d'ordinateur 22. Le programme 22 est contenu dans la mémoire 20 et comporte des instructions d'exécution des étapes d'un procédé de traitement de l'instruction d'envoi du contenu qui est sélectionné par le serveur d'application Si, conformément à l'invention.

Le contrôleur de fonction 7a comprend également des moyens d'interface d'entrée/sortie 23 pour communiquer avec le serveur d'application Si.

Le contrôleur de fonction 7a comprend également des moyens d'interface d'entrée/sortie 24 pour communiquer avec le réseau de pairs 7.

La structure du processeur de fonction 7b est illustrée schématiquement à la Fig.3. Le processeur de fonction 7b comprend notamment une mémoire 30 et un microprocesseur 31. Le microprocesseur 31 est piloté par un programme d'ordinateur 32. Ce programme 32 est contenu dans la mémoire 30 et comporte des instructions d'exécution des étapes d'un procédé de mise à disposition de ressources, conformément à l'invention.

Le processeur de fonction 7b comprend des moyens d'interface d'entrée/sortie 33 pour communiquer avec le réseau de pairs 7.

Le processeur de fonction 7b comprend également des moyens d'interface d'entrée/sortie 34 pour communiquer avec un moyen de stockage 8. Le moyen de stockage 8 stocke le contenu sélectionné par le serveur d'application Si.

Le processeur de fonction 7b comprend également des moyens d'interface d'entrée/sortie 35 pour communiquer avec la passerelle 5.

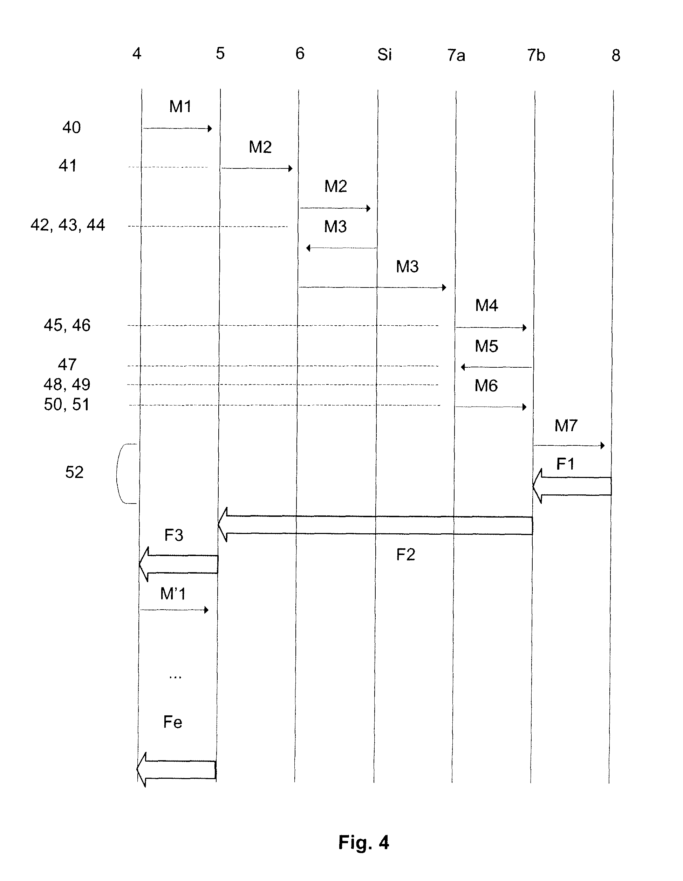

La Fig.4 décrit un mode de réalisation, selon l'invention, d'un procédé pour la mise en oeuvre d'un service impliquant l'envoi du contenu sélectionné par le serveur d'application Si à l'équipement client 4 suite à l'action du client.

Le procédé pour la mise en oeuvre du service débute par une étape 40. A l'étape 40, l'équipement client 4 envoie le premier message de requête M1 à la passerelle 5 pour l'obtention d'un premier contenu.

Le premier message de requête M1 est un message de signalisation construit selon la norme ISUP (Integrated Service digital network User Part en Anglais) conformément à la norme Q.764. Le premier message de requête M1 comprend l'identifiant de l'action du client, c'est-à-dire ici le numéro de téléphone associé au portail téléphonique, ainsi qu'un numéro de téléphone associé à l'équipement client 4.

La passerelle 5 reçoit le premier message de requête M1 et construit le second message de requête M2 qui est adapté à l'architecture IMS. Le second message de requête M2 comprend une syntaxe spécifique au protocole SIP (Session Initiation Protocol en Anglais) conformément à la RFC 3261. Le second message de requête M2 comprend, notamment, l'expression INVITE afin de demander l'établissement d'une première session SIP. La première session SIP est établie entre la passerelle 5 et le serveur d'application Si.

Le second message de requête M2 comprend une adresse de la passerelle 5 conforme au protocole SIP, une adresse du serveur d'application Si conforme au protocole SIP. L'adresse SIP du serveur d'application Si est l'adresse SIP associée au numéro de téléphone composé par le client. Le second message de requête M2 comprend également une adresse IP de la passerelle 5, un numéro de port réservé par la passerelle 5 pour recevoir le premier contenu, des formats de codage supportés par la passerelle 5, l'identifiant de l'action du client. Dans une variante de réalisation, la passerelle 5 indique des préférences dans le second message de requête M2 pour que la passerelle 5 reçoive le premier contenu dans un format de codage souhaité.

Dans le cas où la passerelle 5 ne connaît pas l'adresse IP du serveur d'application Si, le second message de requête M2 est envoyé dans une étape 41 à l'équipement de routage 6. L'équipement de routage 6 traduit l'adresse SIP du serveur d'application contenue dans le second message de requête M2 en une adresse IP du serveur d'application. L'équipement de routage 6 relaie ensuite le second message de requête M2 au serveur d'application Si.

En variante, dans le cas où la passerelle 5 connaît l'adresse IP du serveur d'application Si, le second message de requête M2 est directement envoyé au serveur d'application Si, sans passer par le routeur 6.

Le serveur d'application Si reçoit dans une étape 42 le second message de requête M2. Le serveur d'application Si analyse le second message de requête M2 et détermine que le second message de requête M2 contient comme identifiant de l'action du client le numéro de téléphone associé au portail téléphonique. Le serveur d'application Si détermine alors que le premier contenu à envoyer doit être une annonce d'accueil dans le portail téléphonique météorologique. Par exemple, le premier contenu est une annonce vocale souhaitant la bienvenue au client dans le portail de la société METEO FRANCE et invitant le client à composer le numéro du département dont le client souhaite connaître la prévision météorologique.

En variante, dans le cas où le portail téléphonique n'est pas disponible, le premier contenu est une annonce vocale qui informe le client que le service recherché n'est pas disponible.

Le serveur d'application Si élabore un message d'instruction d'envoi M3 du premier contenu à partir du second message de requête M2, au cours d'une étape 44. Le message d'instruction d'envoi M3 contient l'expression INVITE pour demander l'établissement d'une deuxième session SIP. La deuxième session SIP est établie entre le serveur d'application Si et le contrôleur de fonction 7a.

Le message d'instruction d'envoi M3 comprend l'adresse SIP du serveur d'application Si, une adresse SIP du contrôleur de fonction 7a, un identifiant du premier contenu. Le message d'instruction d'envoi M3 comprend également des paramètres de connexion avec la passerelle, notamment l'adresse IP de la passerelle 5, le numéro de port de la passerelle 5 réservé pour recevoir le premier contenu, les formats de codage supportés par la passerelle 5. Ces paramètres de connexion sont destinés à être utilisés pour l'établissement, entre le processeur de fonction 7b et la passerelle 5, d'une liaison de communication adaptée à la transmission du premier contenu.

Le message d'instruction d'envoi M3 est envoyé à l'équipement de routage 6. L'équipement de routage 6 relaie le message d'instruction d'envoi M3 au contrôleur de fonction 7a.

En variante, le message d'instruction d'envoi M3 est envoyé directement au contrôleur de fonction 7a.

Le contrôleur de fonction 7a reçoit le message d'instruction d'envoi M3 à partir des moyens d'interface d'entrée/sortie 23.

Le contrôleur de fonction 7a construit un message d'interrogation M4 à partir du message d'instruction d'envoi M3. Le message d'interrogation M4 est un message pair-à-pair contenant une syntaxe spécifique au protocole pair-à-pair pour la communication entre les pairs du réseau de pairs. Le message d'interrogation contient, par exemple, l'expression GET. Dans le mode de réalisation décrit à la Fig.1, le message d'interrogation M4 comprend également l'expression REQUEST CODEC ainsi que les formats de codage supportés par la passerelle 5.

Le contrôleur de fonction 7a diffuse lors d'une étape 45 le message d'interrogation M4 à travers le réseau de pairs 7.

Le message d'interrogation M4 est reçu à l'étape 46 par un pair appelé dans la suite de la description pair récepteur. A la réception du message d'interrogation M4, le pair récepteur détermine s'il a les capacités requises. Par exemple, le pair récepteur vérifie sa charge CPU et le niveau d'utilisation de sa bande passante pour déterminer s'il a les capacités de traitement requises. Si le pair récepteur a les capacités requises, le pair récepteur envoie un message de réponse positive M5 au contrôleur de fonction 7a au cours d'une étape 47. Le message de réponse positive M5 comprend, par exemple, l'expression OK et des formats de codage supportés par le pair récepteur.

Le contrôleur de fonction 7a reçoit le message de réponse positive M5 par l'intermédiaire des moyens d'interface d'entrée/sortie 24.

Dans une étape 48, le contrôleur de fonction 7a sélectionne le pair récepteur pour être le processeur de fonction 7b, parmi le ou les pairs récepteurs qui lui ont envoyé un message de réponse positive M5. La sélection du pair récepteur est fonction de la capacité des différents pairs récepteurs. Le pair récepteur sélectionné est, par exemple, le pair récepteur qui a la bande passante la plus large.

Dans une étape 50, le contrôleur de fonction 7a envoie au pair récepteur sélectionné un message de commande M6. Le message de commande M6 comprend l'expression GET. Dans le mode de réalisation décrit à la Fig.1, le message de commande M6 comprend également l'expression ORDER, l'adresse IP de la passerelle 5, le numéro de port de la passerelle 5 réservé pour recevoir le premier contenu, l'identifiant du premier contenu et un format de codage dans lequel le pair récepteur doit envoyer dans un flux continu (streaming en Anglais) le premier contenu, appelé dans la suite de la description format de codage d'envoi.

Dans une variante de réalisation, les informations à transmettre au pair récepteur sont réparties différemment entre le message d'interrogation M4 et le message de commande M6. Le message d'interrogation M4 comprend, par exemple, les expressions GET et REQUEST CODEC, les formats de codage supportés par la passerelle 5, l'adresse IP de la passerelle 5, le numéro de port de la passerelle 5 réservé pour recevoir le premier contenu, l'identifiant du premier contenu. Le message de commande M6 comprend, par exemple, les expressions GET et ORDER, le format de codage dans lequel le pair récepteur doit envoyer dans un flux continu (streaming en Anglais) le premier contenu.

Dans un mode de réalisation spécifique, le contrôleur de fonction 7a sélectionne le format de codage d'envoi si le pair récepteur sélectionné est apte à obtenir le premier contenu codé selon différents formats de codage. Le format de codage d'envoi est par exemple sélectionné en tenant compte des préférences de la passerelle 5 indiquées dans le second message de requête M2. Une telle étape de sélection 49 est réalisée préalablement à l'étape 50 d'envoi du message de commande M6.

Au cours d'une étape 51, le pair récepteur sélectionné reçoit le message de commande M6. A la réception du message de commande M6, le pair récepteur sélectionné joue le rôle de processeur de fonction 7b, mettant en oeuvre les étapes décrites ci-dessous, conformément à la commande M6 reçue du pair contrôleur 7a.

Le processeur de fonction 7b obtient lors d'une étape 52 le premier contenu codé selon le format de codage d'envoi.

Cette étape 52 comprend l'envoi d'un message M7 de demande de téléchargement du premier contenu à destination du moyen de stockage 8. Le moyen de stockage 8 est un disque dur ou un ensemble de disques durs externes au processeur de fonction 7b. En variante, le moyen de stockage est une mémoire interne au processeur de fonction 7b. Le message M7 de demande de téléchargement comprend une syntaxe spécifique à un protocole de téléchargement, par exemple le protocole FTP (File Transfert Protocol en Anglais) conformément à la RFC 959. Le message M7 de demande de téléchargement comprend, par exemple, l'expression PORT. Le message M7 de demande de téléchargement comprend également l'identifiant du premier contenu, une adresse IP du processeur de fonction 7b, un numéro de port réservé par le processeur de fonction 7b pour recevoir le premier contenu. Le moyen de stockage 8 sélectionne le premier contenu à partir de l'identifiant du premier contenu. L'étape 52 comprend également l'envoi du premier contenu par le moyen de stockage 8 sous forme d'un flux F1 conforme au protocole FTP.

Dans un mode de réalisation, le premier contenu est reçu codé dans le format de codage d'envoi.

Le codage du premier contenu est une opération de transformation binaire du premier contenu à l'aide d'un logiciel de codage. Le décodage du premier contenu codé est une opération de transformation inverse du premier contenu codé à l'aide d'un logiciel de décodage. Le logiciel de codage et le logiciel de décodage constituent un seul logiciel de codage-décodage appelé codec. Un codec est associé à un format de codage. Un codec est une ressource multimédia.

Différents formats de codage peuvent être utilisés selon l'application recherchée. Par exemple, dans le cadre de données audio, il est possible d'utiliser le format G711, le format G729 ou le format AMR (Adaptive multi-rate, en Anglais). Le format G711 est utilisé dans la téléphonie standard, le réseau RNIS (Réseau numérique à intégration de services), la voix sur IP. Le format G729 est utilisé dans la téléphonie de qualité, la visioconférence, la voix sur IP. Le format AMR est utilisé dans les réseaux mobiles.

En variante, le premier contenu est reçu dans un format de codage différent du format de codage d'envoi. Le processeur de fonction 7b effectue alors une conversion de format de codage également appelée transcodage. Par exemple, si le premier contenu est reçu codé dans le format G711 par le processeur de fonction 7b, le processeur de fonction 7b convertit le premier contenu dans le format G729 s'il possède le codec associé à ce format.

Le processeur de fonction 7b établit avec la passerelle une liaison de communication à partir de paramètres de connexion transmis par le pair contrôleur 7a et envoie le premier contenu codé dans le format de codage d'envoi, de préférence sous forme de flux continu F2 (streaming en Anglais). Le flux continu F2 est conforme au protocole RTSP (Real-Time Streaming Protocol en Anglais). Le protocole RTSP est décrit dans la RFC 2326. En variante le flux continu F2 est transmis selon le protocole RTP (Real-Time Transport Protocol en Anglais). Le protocole RTP est décrit dans la RFC 1889. Le processeur de fonction 7b comprend alors la pile protocolaire RTSP ou la pile protocolaire RTP.

Le premier contenu est transmis par la passerelle 5 sous forme d'un flux continu F3 (streaming en Anglais) à l'équipement client 4.

Dans une variante de réalisation, la passerelle 5 effectue également un transcodage du premier contenu codé, par exemple, un transcodage du format G729 vers le format AMR.

L'invention concerne ainsi un procédé pour mettre en oeuvre le service recherché par le client. Un tel procédé comporte notamment les étapes 40 à 52.

L'invention concerne également un procédé de traitement de l'instruction d'envoi du premier contenu. Un tel procédé comporte les étapes 45, 48, 49, 50.

L'invention concerne également un procédé de mise à disposition de ressources. Un tel procédé comporte les étapes 46, 47, 51, 52.

Une fois que le client a pris connaissance du premier contenu, il effectue une seconde action. Cette seconde action est la composition du numéro de département sur le clavier de l'équipement client 4.

L'identifiant de l'action du client est alors une tonalité multifréquence (Dual Tone multifrequency en Anglais) associée à une touche spécifique du clavier de l'équipement client 4. L'équipement client 4 envoie alors un autre message de requête M1' contenant la tonalité multifréquence associée à la touche composée par le client. La passerelle 5 détecte la tonalité multifréquence dans le message M'1. La tonalité multifréquence est une donnée analogique qui ne peut pas être véhiculée sous cette forme dans le deuxième réseau 3. La passerelle 5 détecte alors la tonalité multifréquence dans le message M'1, et transforme la tonalité multifréquence en une donnée numérique. La tonalité multifréquence transformée est alors utilisée comme identifiant de l'action du client. La tonalité multifréquence transformée est ensuite transmise au serveur d'application Si via la première session SIP qui a été établie préalablement par le second message de requête M2.

En variante, la passerelle 5 transmet la tonalité multifréquence transformée au serveur d'application Si par l'intermédiaire du processeur de fonction 7b et du contrôleur de fonction 7a.

Le serveur d'application Si analyse la tonalité multifréquence transformée et sélectionne en conséquence un second contenu. Le second contenu est envoyé vers l'équipement client 4 par le même pair qui a envoyé le premier contenu à l'équipement client 4.

En variante, le second contenu est envoyé vers l'équipement client 4 par un pair différent du pair qui a envoyé le premier contenu à l'équipement 4.

Le second contenu est la prévision météorologique recherchée par le client, le service météorologique est alors rendu. En variante, le second contenu est, par exemple, une annonce vocale invitant le client à sélectionner le jour souhaité pour la prévision météorologique. Le client appuie sur la touche du clavier de l'équipement client 4 correspondant au jour souhaité.

Le client effectue des actions sur le clavier de l'équipement client 4 tant que la prévision météorologique recherchée par le client n'est pas reçue par l'équipement client 4.

Le service météorologique est rendu lors de la réception de la prévision météorologique par l'équipement client 4. La prévision météorologique est reçue dans un flux continu Fe (streaming en Anglais).

L'invention concerne également un procédé d'attribution d'au moins un avantage à l'utilisateur qui a mis son équipement utilisateur à disposition dans le réseau de pairs 7. L'équipement utilisateur stocke le programme 32 qui comporte des instructions d'exécution des étapes du procédé de mise à disposition de ressources. Ce programme est par exemple stocké suite à une offre de téléchargement à partir d'un exemplaire du programme 32 stocké sur un support d'enregistrement appartenant au fournisseur de service.

Le contrôleur de fonction 7a génère des informations de taxation. Le contrôleur de fonction 7a peut ainsi associer un avantage à un identifiant de l'utilisateur dans une base de données présente dans un serveur de facturation 9. A chaque fois que l'équipement utilisateur est sélectionné pour être le processeur de fonction 7b, le contrôleur de fonction 7a envoie un message M8 d'attribution d'un avantage vers le serveur de facturation 9. Le message M8 d'attribution d'un avantage comprend un ordre pour attribuer un avantage à l'équipement utilisateur, l'identifiant de l'utilisateur, par exemple un identifiant de facturation. L'identifiant de facturation est transmis préalablement par le processeur de fonction 7b au contrôleur de fonction 7a. Par exemple, l'identifiant de facturation est transmis dans le message de réponse positive M5.

L'avantage attribué est, par exemple, un crédit. Ainsi, l'utilisateur qui met à disposition son équipement utilisateur obtient une réduction sur sa facture de communication.

En variante, l'avantage attribué est l'accès gratuit à un service particulier comme par exemple un service d'accès à la prévision météorologique. Ainsi l'utilisateur peut être un client du service.

L'invention décrite n'est pas limitée aux modes de réalisations précédents.

Par exemple, dans un mode réalisation spécifique, l'équipement client 4 et le processeur de fonction 7b sont confondus.

Dans un autre mode de réalisation, le service est un service d'accès à une messagerie vocale. Le processeur de fonction 7b possède alors des moyens supplémentaires d'enregistrement de contenus vocaux. Ces contenus vocaux sont ensuite stockés dans le moyen de stockage 8.

Dans un autre mode de réalisation, l'action du client est une parole émise par le client. Le processeur de fonction 7b possède alors des moyens supplémentaires de reconnaissance automatique de la parole.

Le système de communication 1 est ici, basé sur l'architecture IMS utilisant le protocole SIP. Dans un autre mode de réalisation, le système de communication 1 est basé sur une autre architecture utilisant le protocole SIP. Dans un autre mode de réalisation, le système 1 est basé sur une autre architecture utilisant un autre protocole que le protocole SIP comme le protocole H323 ou le protocole MEGACO.

## Revendications

1. Procédé d'envoi d'un contenu à un système destinataire, ledit procédé comprenant les étapes suivantes:
- réception, en provenance d'un serveur d'application (Si) ne faisant pas partie du réseau de pairs, par un pair déterminé (7a) - dit pair contrôleur - du réseau de pairs (7), d'une instruction (M3) de traitement spécifiant un ou plusieurs formats de codage;
- diffusion (45) par le pair contrôleur (7a) à travers un réseau de pairs (7) d'un message d'interrogation (M4), en vue de rechercher au moins un pair apte à obtenir et transmettre ledit contenu codé selon au moins un desdits formats;
- sélection (48) par le pair contrôleur (7a) d'un pair parmi le ou les pairs ayant répondu positivement audit message d'interrogation (M4);
- envoi (50) par le pair contrôleur (7a) au pair sélectionné (7b) d'un message de commande (M6) pour commander l'établissement d'une liaison de communication entre le pair sélectionné et ledit système destinataire et la transmission par le pair sélectionné, à travers ladite liaison, du contenu codé selon un desdits formats.

2. Procédé selon la revendication 1 dans lequel le réseau de pairs joue le rôle d'un fournisseur de ressources média dans une architecture de type IMS par l'intermédiaire du pair contrôleur.

3. Procédé selon la revendication 1 ou 2, dans lequel le système destinataire n'accède pas audit réseau de pairs, le pair contrôleur recevant du serveur d'application (Si) des paramètres de connexion au système destinataire en vue de l'établissement de ladite liaison.

4. Procédé de mise à disposition de ressources, destiné à être mis en oeuvre par un pair d'un réseau de pairs dans le cadre de l'envoi d'un contenu à système destinataire, le procédé comportant les étapes suivantes:
- réception (46) d'un message d'interrogation (M4) en provenance d'un pair dit pair contrôleur, ledit message d'interrogation visant à rechercher dans le réseau de pairs au moins un pair apte à obtenir et transmettre ledit contenu codé selon au moins un format de codage;
- envoi (47) d'une réponse positive (M5) audit équipement réseau dans le cas où le pair interrogé a les aptitudes recherchées;
- réception (51) d'un message de commande (M6) en provenance du pair contrôleur pour commander l'établissement d'une liaison de communication entre le pair sélectionné et ledit système destinataire et la transmission par le pair sélectionné, à travers ladite liaison, du contenu codé selon un desdits formats;
- obtention et envoi (52) au système destinataire à travers ladite liaison dudit contenu codé selon un desdits formats.

5. Procédé pour mettre en oeuvre un service impliquant l'envoi d'un contenu à un système destinataire suite à une ou plusieurs actions d'un client, ledit procédé comprenant les étapes suivantes :
- détermination (43) d'un contenu à envoyer au système destinataire en réponse à ladite action;
- élaboration (44) d'une instruction d'envoi (M3) dudit contenu, ladite instruction spécifiant un ou plusieurs formats de codage dudit contenu;
- transmission de ladite instruction à un pair déterminé d'un réseau de pairs afin de déclencher une exécution par le pair déterminé des étapes d'un procédé selon l'une quelconque des revendications 1 à 3.

6. Equipement réseau, formant pair d'un réseau de pairs, et comportant des moyens pour la mise en oeuvre des étapes du procédé selon l'une quelconque des revendications 1 à 4.

7. Equipement réseau, formant pair d'un réseau de pairs, et comportant des moyens pour la mise en oeuvre des étapes du procédé selon la revendication 4.

8. Système pour la mise en oeuvre d'un service impliquant l'envoi d'un ou plusieurs contenus à un système destinataire suite à une ou plusieurs actions d'un client, ledit système comportant :
- un serveur d'application (Si) pour déterminer un contenu à envoyer au système destinataire en réponse à une action du client et pour élaborer une instruction d'envoi dudit contenu, ladite instruction spécifiant un ou plusieurs formats de codage;
- un équipement réseau selon la revendication 6 ou 7..

9. Programme d'ordinateur comportant des instructions pour la mise en oeuvre d'un procédé selon l'une des revendications 1 à 5, lorsque ledit programme est exécuté par un processeur.

10. Procédé d'offre de téléchargement d'un programme d'ordinateur selon la revendication 9, à partir d'un exemplaire dudit programme stocké sur un support d'enregistrement.

11. Procédé d'attribution d'au moins un avantage à un utilisateur associé à un équipement utilisateur comportant une étape consistant à attribuer un avantage audit utilisateur lorsqu'un programme selon la revendication 9 est exécuté par un processeur de l'équipement utilisateur.
